# EUROPEAN PATENT SPECIFICATION

(11) **EP 1 950 393 B1**
(45) Date of publication and mention of the grant of the patent: **14.04.2010**
(21) Application number: 07425044.0
(22) Date of filing: 29.01.2007
(51) Int. Cl.: F02D 9/10, F02M 35/108

(54) **Intake manifold having a swirl system for an internal combustion engine**
Ansaugrohr mit Wirbelanlage
Collecteur d'admission ayant un système tourbillonnaire

(43) Date of publication of application: 30.07.2008
(73) Proprietor: Magneti Marelli S.p.A., Corbetta (MI) (IT)
(72) Inventor: Fornara, Stefano, 41100 Modena (IT); Schiavina, Giampaolo, 40133 Bologna (IT); Pace, Giancarlo, 40138 Bologna (IT)
(74) Representative: Jorio, Paolo

(56) References cited:
- EP-A- 1 770 263
- EP-A1- 0 835 998
- GB-A- 759 111
- US-A- 2 529 572
- US-A- 5 669 347
- US-A1- 2005 279 310

## Description

### TECHNICAL FIELD

The present invention relates to an intake manifold having a swirl system for an internal combustion engine.

### BACKGROUND ART

An internal combustion engine is provided with a number of cylinders, each of which is connected to an intake manifold by means of at least one intake valve and to an exhaust manifold by means of at least one exhaust valve. The intake manifold receives fresh air (i.e. air from the external environment) through a feeding pipe regulated by a butterfly valve and is connected to the cylinders by means of corresponding intake pipes, each of which is regulated by at least one intake valve.

It has recently been suggested the introduction of a swirl system, which is adapted to vary the section of the intake pipes during engine operation according to the speed of the engine itself (i.e. to the angular revolution speed of the crankshaft). At low speeds, the air introduction section through the intake pipes is decreased so as to generate turbulences in the intake air flow which improve the mixing of air and fuel in the cylinders; in virtue of the presence of these turbulences which improve mixing, all the injected fuel is burnt and thus the polluting emissions generated by the combustion are reduced. At high speeds, the introduction section of the air through the intake pipes is maximised so as to allow a complete filling of the cylinders and thus allow the generation of the maximum possible power.

In order to vary the air introduction section through the intake pipes, each intake pipe presents two reciprocally parallel channels, only one of which may be completely closed by a butterfly choke valve. At low speeds, the butterfly choke valves are closed consequently reducing the air introduction section through the intake pipes, while at high speeds the butterfly choke valves are opened to maximise the air introduction section through the intake pipes.

In Patent application EP1770263, it has been suggested an intake manifold having a swirl system wherein each choke valve comprises: a main body, which is formed by moulded plastic, is rotationally mounted about a central axis and presents a butterfly valve which is adapted to seal an intake pipe channel; a locking flange, which is formed by moulded plastic, is fitted on the main body so as to be able to rotate with respect to the main body itself and is made integral with an interface flange of the intake manifold; a locking element, which is formed by plastic material, is made integral with the main body to hold the locking flange in position and is adapted to receive motion from an actuator device; and a lip seal formed by rubber or the like, which is maintained in position by the locking flange.

The constructive solution for making an intake manifold having a swirl system suggested in patent application EP1770263 presents a reduced number of components which are cost-effective to manufacture and particularly simple to assemble; however, some experimental tests have pointed out that such constructive solution may sporadically present locking of the choke valves (i.e. locking of the rotation of the main bodies of the choke valves) following the effect caused by the high air pressure in the intake pipes which imposes high axial thrust on the main bodies of the choke valves against the wall of the intake pipes themselves.

US5669347 discloses an intake system for a multicylinder internal combustion engine including a manifold having inlet runners for conducting charge air into the cylinders of an engine, and at least one secondary throttle valve situated within at least one of the inlet runners; an actuator positions the secondary throttle valve, with the actuator being operated by a controller.

### DISCLOSURE OF INVENTION

It is the object of the present invention to make an intake manifold having a swirl system for an internal combustion engine, which manifold is free from the above-described drawbacks, is easy and cost-effective to manufacture and is simple to assemble.

According to the present invention, an intake manifold having a swirl system for an internal combustion engine is made according to that established in the accompanying claims.

### BRIEF DESCRIPTION OF THE DRAWINGS

The present invention will now be described with reference to the accompanying drawings which illustrate a non-limitative embodiment thereof, in which:
- figure 1 is a schematic view of an internal combustion engine provided with an intake manifold made according to the present invention;
- figure 2 is a schematic and perspective view of the intake manifold in figure 1;
- figure 3 is a perspective view of a choke valve of the intake manifold in figure 2;
- figure 4 is an elevation side view of the choke valve in figure 3;
- figure 5 is an elevation side view of the choke valve in figure 3 arranged inside an intake channel and in an opening position; and
- figure 6 is an elevation side view of the choke valve in figure 3 arranged inside an intake channel and in a closing position.

### PREFERRED EMBODIMENT OF THE INVENTION

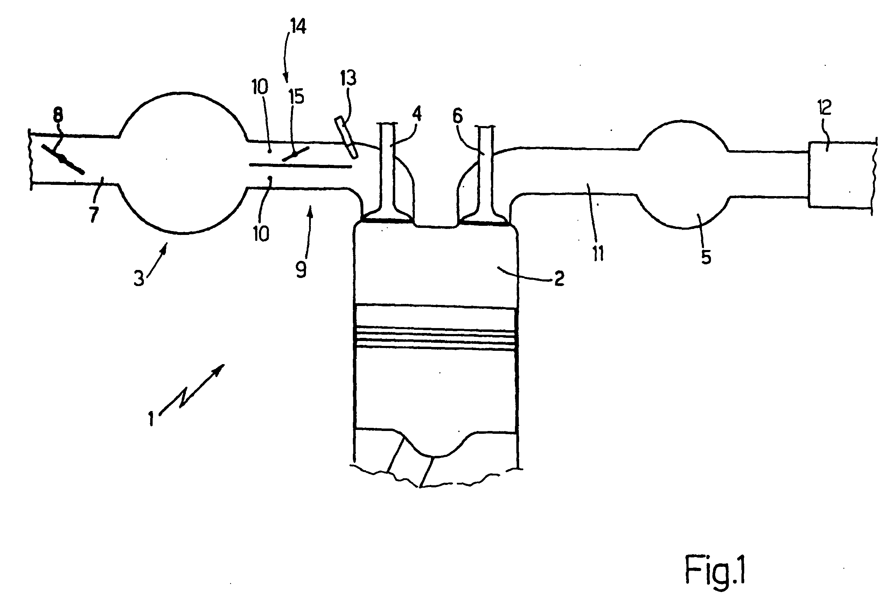

In figure 1, numeral 1 indicates as a whole an internal combustion engine provided with four cylinders 2 (only one of which is shown in figure 1), each of which is connected to an intake manifold 3 by means of two intake valves 4 (only one of which is shown in figure 1) and to an exhaust manifold 5 by means of two exhaust valves 6 (only one of which is shown in figure 1).

Intake manifold 3 receives fresh air (i.e. air from the external environment) through a feeding pipe 7 regulated by a butterfly valve 8 and is connected to cylinders 2 by means of corresponding intake pipes 9 (only one of which is shown in figure 1), each of which comprises two reciprocally parallel channels 10 and is regulated by corresponding intake valves 4. Similarly, exhaust manifold 5 is connected to cylinders 2 by means of corresponding exhaust pipes 11 (only one of which is shown in figure 1), each of which is regulated by corresponding exhaust valves 6; an emission pipe 12, which ends with a muffler (which is known and not shown) to release the gases produced by combustion into the atmosphere departs from exhaust manifold 5.

According to a preferred embodiment, the fuel (e.g. petrol, diesel, methane or LPG) is injected within each intake pipe 9 by means of a corresponding injector 13 arranged near corresponding intake valves 4. According to a different embodiment (not shown), injectors 13 are arranged so as to directly inject the fuel into each cylinder 2.

Intake manifold 3 comprises a swirl system 14, which is adapted to vary the introduction section of the air of intake pipes 9 during the operation of engine 1 according to the speed of engine 1 itself. Specifically, swirl system 14 comprises, for each intake pipe 9, a choke valve 15, which is mounted along one of the two channels 10 of intake pipe 9 and is adapted to vary the air introduction section through channel 10 itself; specifically, each choke valve 15 is mobile between a closing position in which it fully closes channel 10 and a maximum opening position.

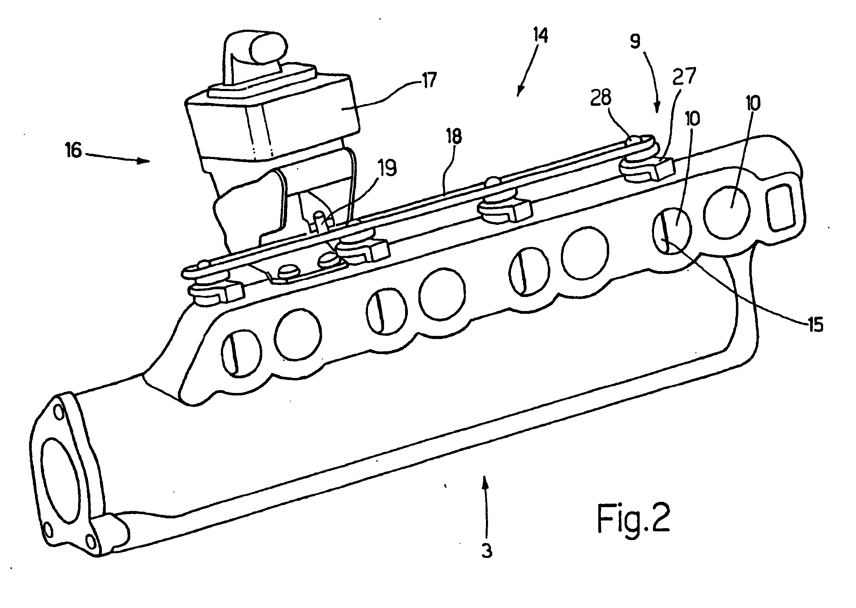

As shown in figure 2, swirl system 14 comprises a single actuator device 16 of the electric or pneumatic type, which simultaneously and synchronically displaces all four choke valves 15. Actuator device 16 comprises an electrical motor 17 (according to a different embodiment, not shown, motor 17 is either pneumatic or hydraulic), which controls the displacement of a bar 18 between two limit positions corresponding to the closing and maximum opening positions of choke valves 15; bar 18 is mechanically connected to all four choke valves 15 so as to simultaneously and synchronically displace all choke valves 15 themselves. A shaft (not shown) of motor 17 is connected to bar 18 by means of a fork-shaped connection element (not shown), which on one side is keyed to the shaft of motor 17 and on the other is coupled to a pin 19 of bar 18 so as to be able to freely rotate with respect to pin 19 itself.

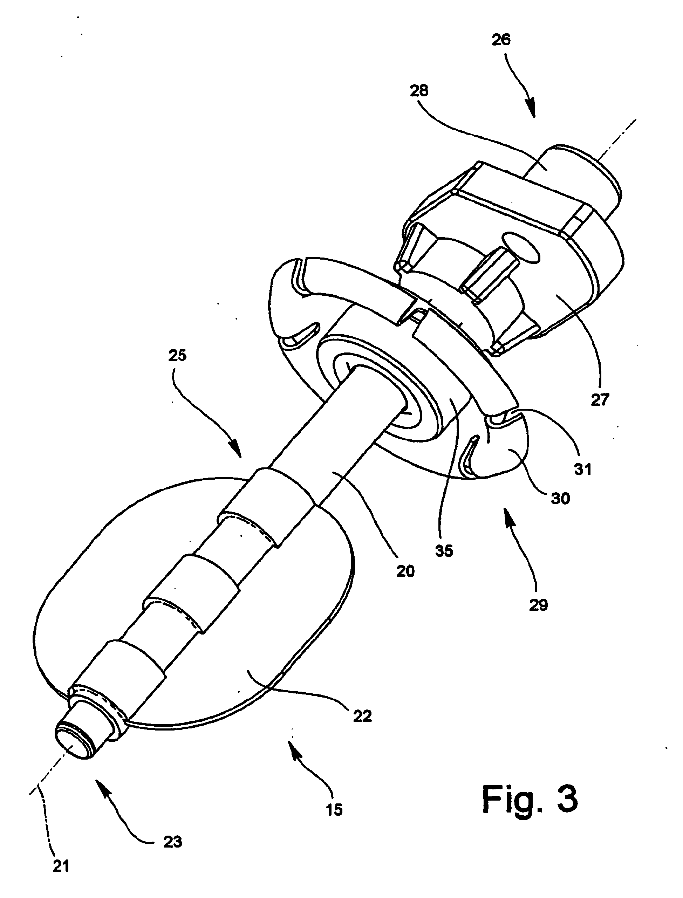

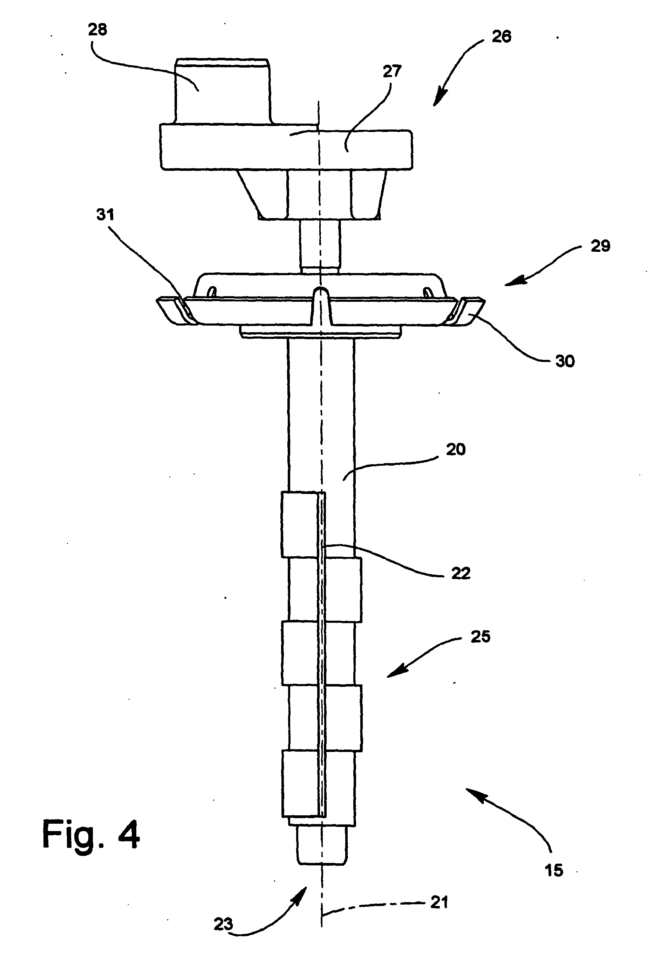

As shown in figures 3-6, each choke valve 15 comprises a shaft 20 which presents a cylindrical shape, is formed by metallic material (typically steel), is arranged through channel 10 of intake pipe 9, and is mounted to rotate about a central rotation axis 21 under the bias of actuator device 16. Shaft 20 has the function of supporting body and supports a butterfly valve plate 22, which is adapted to seal a channel 10 of an intake pipe 9 and thus performs the function of a valve body.

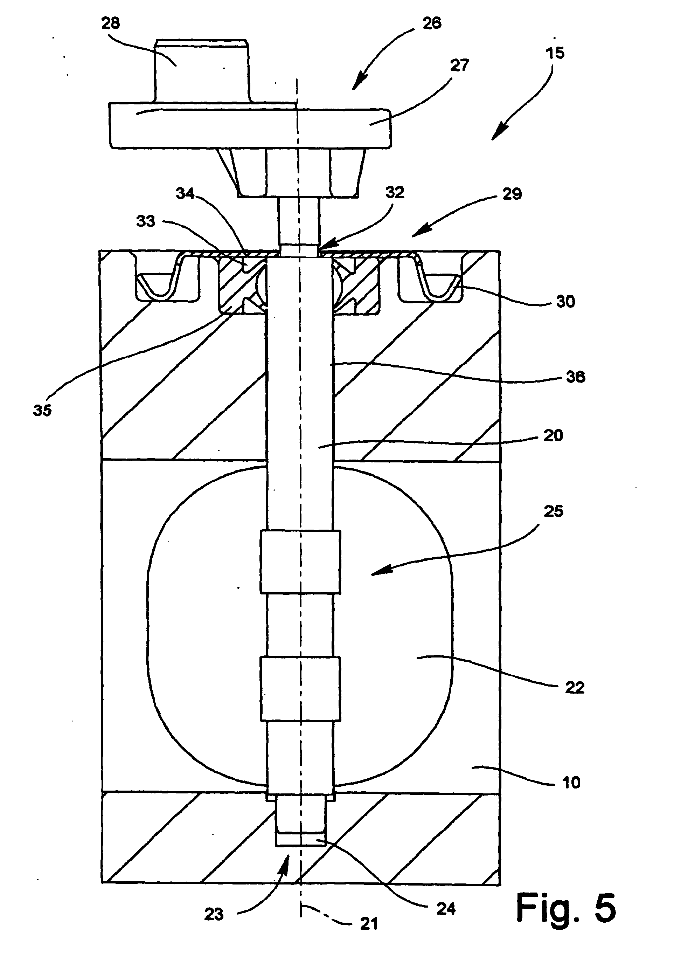

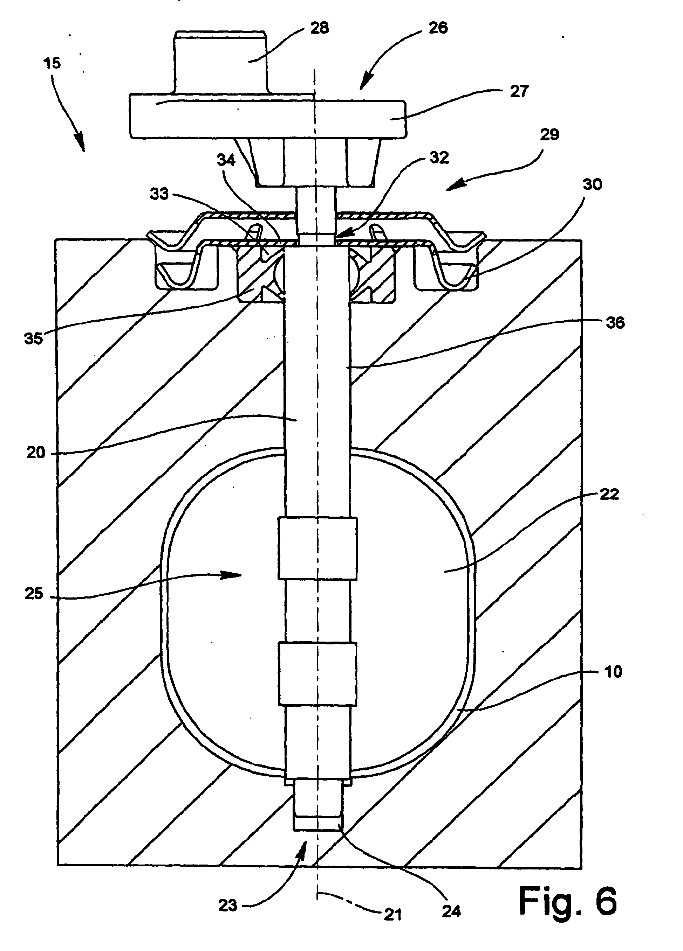

One end 23 of shaft 20 is inserted within a seat 24 (shown in figures 5 and 6) obtained along a wall of channel 10 of intake pipe 9. In the embodiment shown in the accompanying figures, end 23 of shaft 20 and seat 24 present a cylindrical shape; according to a different embodiment (not shown), end 23 of shaft 20 presents a semi-spherical shape and seat 24 presents a conical shape so as to make a ball-on-cone coupling which allows to obtain a correct self-centring positioning of shaft 20.

According to a preferred embodiment shown in the accompanying figures, each butterfly valve plate 22 comprises an assembly seat 25, which is coaxially arranged to shaft 20 and which accommodates shaft 20 itself therein. According to the preferred embodiment shown in the accompanying figures, each assembly seat 25 is defined by five semi-circular bridges. Obviously, each butterfly valve plate 22 is rigidly keyed onto shaft 20 by means of a rigid connection consisting of a welding or a number of screws. The function of each assembly seat 25 is to maintain butterfly valve plate 22 in contact with shaft 20 in case of breakage of the connection (welding or screws) between butterfly valve plate 22 and shaft 20 itself. In this manner, in case of breakage of the connection (welding or screws) between butterfly valve plate 22 and shaft 20, butterfly valve plate 22 remains in contact with shaft 20 and cannot fall along channel 10 of intake pipe 9. The assembly of butterfly valve plate 22 contemplates that shaft 20 is inserted through assembly seat 25 and then that shaft 20 itself is rigidly connected (by means of welding or screws) to butterfly valve plate 22.

Onto one end 26 of shaft 20 opposite end 23, it is fitted a lever 27 which is formed by moulded plastic material, is integral with shaft 20 (i.e. is keyed onto shaft 20 so as to be able to rotate integrally with shaft 20 around rotation axis 21) and presents a connection pin 28 eccentrically mounted with respect to rotation axis 22. Connection pin 28 (as shown in better detail in figure 2) establishes the mechanical connection between bar 18 of actuator device 16 and shaft 20 of choke valve 15 for transmitting motion from actuator device 16 to shaft 20 itself.

Each choke valve 15 further comprises a cup-shaped fastening spring 29 which is formed by metallic material (normally elastic spring steel), has a circular shape and presents a central through hole 30 through which shaft 20 is arranged. Specifically, hole 30 of fastening spring 29 is arranged at an annular groove 31 of shaft 20 so as to prevent any relative axial sliding (i.e. along rotation axis 21) between shaft 20 and locking spring 29 but so as to allow a free rotation of shaft 20 with respect to locking spring 29 about rotation axis 21 at the same time. Preferably, locking spring 29 presents a cup-shape having an external "U"-shaped annular edge and presenting a number of radial weakening slots 31 (six in the embodiment shown in the accompanying figures).

Locking spring 29 is driven into an annular locking seat 32 which is obtained through the wall of channel 10 of intake pipe 9 which accommodates the corresponding choke valve 15. In other words, annular locking seat 32 presents a smaller external diameter than the external diameter of undeformed locking spring 29; consequently, locking spring 29 must be driven into annular locking seat 32 so as to deform locking spring 29 reducing the dimension of locking spring 29 itself. In virtue of the elastic force exerted by locking spring 29 against the walls of annular locking seat 32, locking spring 29 remains static inside annual locking seat 32 withholding shaft 20 in position. In order to better illustrate the deformation of locking spring 29 within annular locking seat 32, figure 6 shows both a deformed locking spring 29 accommodated within annular locking seat 32, and a further undeformed locking spring 29 (whose presence is only demonstrative and not actually contemplated) arranged outside annular locking seat 32.

According to a preferred embodiment, a further smaller circular accommodation seat 33 (i.e. presenting a smaller external diameter) is contemplated coaxial to annular locking seat 32, which is closed on top by a central wall 34 of locking spring 29 and accommodates an annular double lip seal having the function of stopping possible leakages of air into the space which inevitably remains between shaft 20 and cylindrical hole 36 which accommodates shaft 20. Preferably, seal 35 is maintained in position and slightly compressed by central wall 34 of locking spring 29; it is important to underline that seal 35 is maintained static in the correct position by the presence of locking spring 29 also in the presence of an overpressure in channel 10 of intake manifold 9 (overpressure normally present in the case of turbocharged engines).

The assembly of each choke valve 15 contemplates: coupling locking spring 29 to shaft 20; co-moulding lever 27 at end 26 of shaft 20; inserting seal 35 onto shaft 20; arranging butterfly valve plate 22 inside channel 10 of intake pipe 9; inserting shaft 20 through hole 36 and through assembly seat 25 so as to arrange locking spring 29 in front of the lead-in of annular locking seat 32; driving locking spring 29 inside annular locking seat 32; and rigidly connecting (by means of welding or screws) shaft 20 to butterfly valve plate 22.

From a practical point of view, shaft 20 and locking spring 29 assembly is inserted at the same time in accommodation seat 25 of butterfly valve plate 22 and in hole 36 by means of a specific tool which exerts the axial load sufficient to deform locking spring 29 to the complete insertion/clamping within locking seat 32.

Preferably, butterfly valve plate 22 is arranged within channel 10 of intake pipe 9 in an opening position (i.e. parallelly to the central axis of channel 10) and is then rotated by 90° to a closing position (i.e. perpendicular to the central axis of channel 10) to rigidly connect (by means of welding or screws) shaft 20 itself to butterfly valve plate 22. In this manner, the constructive tolerances on the parallelism of the fins of butterfly valve plate 22 may be compensated at least in part so as to define, during the step of assembling, the correct phasing of butterfly valve plate 22 regardless of the subcomponent tolerance. From a practical point of view, butterfly valve plate 22 is positioned within channel 10 by means of a specific tool which determines the correct alignment thereof.

The above-described swirl system 14 presents a number of advantages, in that it is simple and cost-effective to implement, rapid to assemble and at the same time is also particularly robust. All components (shaft 20, butterfly valve plate 22, lever 27, locking spring 29, seal 35) may be simply made with a low number of operations and above all assembly is very fast. Furthermore, since shaft 20 is formed by steel or the like and shaft 20 is axially locked by locking spring 29, each choke valve 15 is very robust and capable of also withstanding the highest overpressures existing within channel 10 of intake pipe 9 without problems. Finally, locking spring 29 with its elastic deformation capacity is capable of compensating for all the possible dimensional variations which may occur in use due to thermal dilation phenomena (particularly of shaft 20 which is formed by metallic material) or to creep phenomena (local plastic deformation of a plastic components under load) of channel 10 of intake pipe 9 which is made of plastic material.

## Claims

1. An intake manifold (3) having a swirl system (14) for an internal combustion engine (1) provided with a number of cylinders (2); for each cylinder (2), the intake manifold (3) comprises an intake pipe (9) which is adapted to connect the intake manifold (3) to the cylinder (2) and comprises in turn two channels (10); for each intake pipe (9), the swirl system (14) comprises a choke valve (15) which is arranged within a channel (10) of the intake pipe (9) and is adapted to vary the air introduction section through the channel (10);
each choke valve (15) comprises:
a shaft (20), which is arranged through the channel (10) of the intake pipe (9), is rotationally mounted about a central rotation axis (21), and presents a first end (26) which extends externally to the channel (10);
a butterfly valve plate (22) supported by the shaft (20); and
a lever (27) fitted onto the shaft (20) at the first end (26) to transmit the rotation motion to the shaft (20) itself;
the intake manifold (3) is **characterised in that** each choke valve (15) comprises:
a locking seat (32), which presents an annular shape (32) and is obtained through the wall of the channel (10) of the intake pipe (9); and
a cup-shaped fastening spring (29) which has a circular shape, presents a central through hole (30) through which the shaft (20) is arranged, is driven into the locking seat (32), and is coupled to the shaft (20) so as to allow the rotation of the shaft (20) about the rotation axis (21) and to prevent an axial slipping of the shaft (20);
wherein the annular locking seat (32) presents a smaller external diameter than the external diameter of the undeformed fastening spring (29) and the fastening spring (29) must be driven into the annular locking seat (32) so as to deform the fastening spring (29) reducing the dimension of the fastening spring (29).

2. An intake manifold (3) according to claim 1 wherein the fastening spring (29) presents a cup-like shape having an external "U"-shaped annular edge (31).

3. An intake manifold (3) according to claim 2, wherein the external annular edge (31) of the fastening spring (29) presents a number of radial weakening cuts (31).

4. An intake manifold (3) according to one of the claims from 1 to 3, wherein the shaft (20) presents an annular groove (32) in which the fastening spring (29) is inserted to prevent any relative axial slipping between the shaft (20) and the fastening spring (29).

5. An intake manifold (3) according to one of the claims from 1 to 4, wherein a circular accommodation seat (33) is contemplated, which is closed on top by a central wall (34) of the fastening spring (29) and accommodates an annular seal (35).

6. An intake manifold (3) according to claim 5, wherein the seal (35) is maintained in position and is slightly compressed by the central wall (34) of the fastening spring (29).

7. An intake manifold (3) according to one of the claims from 1 to 6, wherein a second end (23) of the shaft (20) opposite the first end (26) is inserted within a seat (24) obtained along a wall of the channel (10) of the intake pipe (9).

8. An intake manifold (3) according to one of the claims from 1 to 7, wherein each butterfly valve plate (22) comprises an assembly seat (25) which is arranged coaxial to the shaft (20) and accommodates the shaft (20) itself therein.

9. An intake manifold (3) according to claim 8, wherein the assembly seat (25) of each butterfly plate (22) is defined by a number of semicircular bridges.

10. An intake manifold (3) according to one of the claims from 1 to 9, wherein the lever (27) of each choke valve (15) is integral with shaft (20) and presents a connection pin (28) eccentrically mounted with respect to rotation axis (22).

11. An intake manifold (3) according to one of the claims from 1 to 10, wherein the swirl system (14) comprises a single actuator device (16), which simultaneously and synchronically displaces all the choke valves (15).

12. An intake manifold (3) according to claim 11, wherein the actuator device (16) comprises a bar (18) which is mechanically connected to all choke valves (15) so as to simultaneously and synchronically displace all the choke valves (15) themselves, and a motor (17) which controls the displacement of the bar (18) between two limit positions corresponding to the closing and maximum opening positions of the choke valves (15).

13. An intake manifold (3) according to claim 12, the lever (27) of each choke valve (15) is integral with the shaft (20) and displays a connection pin (28), which is eccentrically mounted with respect to rotation axis (22) and establishes a mechanical connection between the bar (18) of the actuator device (16) and the choke valve (15) for transmitting motion from the actuator device (16) to the choke valve (15) itself.

14. An assembly method of a choke valve (15), comprising:
a shaft (20) which is arranged through a channel (10) of an intake pipe (9), is rotationally mounted about a central rotation axis (21), and presents a first end (26) which extends externally to the channel (10);
a butterfly valve plate (22) supported by shaft (20) and provided with an assembly seat (25) adapted to receive the shaft (20) itself;
a lever (27) fitted onto the shaft (20) at the first end (26) to transmit the rotation motion to the shaft (20) itself;
a locking seat (32), which presents an annular shape (32) and is obtained through the wall of the channel (10) of the intake pipe (9);
a cup-shaped fastening spring (29) which has a circular shape, presents a central through hole (30) through which the shaft (20) is arranged, is driven into the locking seat (32), and is coupled to the shaft (20) so as to allow the rotation of the shaft (20) about the rotation axis (21) and to prevent an axial slipping of the shaft (20)
a circular accommodation seat (33), which is closed on top by a central wall (34) of the fastening spring (29); and
an annular seal (35) accommodated in the further circular accommodation seat (33);
the assembly method comprising the steps of:
coupling the fastening spring (29) to the shaft (20);
coupling the lever (27) at the first end (26) of the shaft (20);
inserting the seal (35) onto the shaft (20);
arranging the butterfly valve plate (22) inside the channel (10) of the intake pipe (9);
inserting the shaft (20) through a through hole (36) of the wall of the channel (10) and through the assembly seat (25) so as to arrange the fastening spring (29) in front of the lead-in of the annular locking seat (32);
driving the fastening spring (29) inside the annular locking seat (32) so as to deform the fastening spring (29) reducing the dimension of the fastening spring (29); and
rigidly connecting the shaft (20) to the butterfly valve plate (22).

15. A method according to claim 14, and comprising the steps of:
arranging the butterfly valve plate (22) inside the channel (10) of the intake pipe (9) in an opening position;
subsequently rotating the butterfly valve plate (22) by 90° to a closing position for rigidly connecting the shaft (20) itself to the butterfly valve plate (22).

## Patentansprüche

1. Ansaugstutzen (3) mit einem Drallsystem (14) für einen Verbrennungsmotor (1), der mit einer Anzahl von Zylindern (2) versehen ist; wobei der Ansaugstutzen (3) für jeden Zylinder (2) ein Ansaugrohr (9) umfasst, welches so ausgelegt ist, dass dieses den Ansaugstutzen (3) mit dem Zylinder (2) verbindet und wiederum zwei Kanäle (10) aufweist; wobei das Drallsystem (14) für jedes Ansaugrohr (9) ein Drosselventil (15) umfasst, welches innerhalb eines Kanals (10) des Ansaugrohrs (9) angeordnet ist und so ausgelegt ist, dass dieses den Lufteinführabschnitt durch den Kanal (10) variieren kann;
wobei jedes Drosselventil (15) umfasst:
eine Welle (20), welche durch den Kanal (10) des Ansaugrohrs (9) hindurch angeordnet ist, drehbar um eine zentrale Drehachse (21) angebracht ist und ein erstes Ende (26) aufweist, welches sich extern zum Kanal (10) erstreckt;
eine Drosselklappe (22), die durch die Welle (20) abgestützt wird; und
einen Hebel (27), der auf der Welle (20) an dem ersten Ende (26) angebracht ist, um die Drehbewegung der Welle (20) selbst zu übertragen;
wobei der Ansaugstutzen (3) **dadurch gekennzeichnet ist, dass** jedes Drosselventil (15) umfasst:
einen Sperrsitz (32), welcher eine Ringform (32) aufweist und durch die Wand des Kanals (10) des Ansaugstutzens (9) erhalten wird; und
eine schalenförmige Befestigungsfeder (29), welche eine Kreisform hat, ein zentrales Durchgangsloch (30) aufweist, durch welches die Welle (20) hindurch angeordnet ist, in den Sperrsitz (32) gedrückt wird und mit der Welle (20) gekoppelt ist, um so die Drehung der Welle (20) um die Drehachse (21) zu erlauben und einen axialen Schlupf der Welle (20) zu verhindern;
wobei der ringförmige Sperrsitz (32) einen kleineren Außendurchmesser als der Außendurchmesser der unverformten Befestigungsfeder (29) aufweist und die Befestigungsfeder (29) in den ringförmigen Sperrsitz (32) gedrückt werden muss, um so die Befestigungsfeder (29) zu verformen und die Dimension der Befestigungsfeder (29) zu verringern.

2. Ansaugstutzen (3) nach Anspruch 1, in welchem die Befestigungsfeder (29) eine Schalenform mit einer äußeren "U"-förmigen Ringkante (31) aufweist.

3. Ansaugstutzen (3) nach Anspruch 2, in welchem die äußere Ringkante (31) der Befestigungsfeder (29) eine Anzahl von radialen Schwächungsschnitten (31) aufweist.

4. Ansaugstutzen (3) nach einem der Ansprüche 1 bis 3, in welchem die Welle (20) eine Ringnut (32) aufweist, in welcher die Befestigungsfeder (29) eingesetzt ist, um einen relativen axialen Schlupf zwischen der Welle (20) und der Befestigungsfeder (29) zu verhindern.

5. Ansaugstutzen (3) nach einem der Ansprüche 1 bis 4, in welchem ein kreisförmiger Aufnahmesitz (33) vorgesehen ist, welcher auf der Oberseite durch eine zentrale Wand (34) der Befestigungsfeder (29) geschlossen ist und einen ringförmigen Sitz (35) aufnimmt.

6. Ansaugstutzen (3) nach Anspruch 5, in welchem der Sitz (35) durch die zentrale Wand (34) der Befestigungsfeder (29) in Position gehalten wird und leicht komprimiert wird.

7. Ansaugstutzen (3) nach einem der Ansprüche 1 bis 6, in welchem ein zweites Ende (23) der Welle (20) gegenüber dem ersten Ende (26) in einen Sitz (24) eingesetzt ist, der entlang einer Wand des Kanals (10) des Ansaugrohrs (9) erhalten wird.

8. Ansaugstutzen (3) nach einem der Ansprüche 1 bis 7, in welchem jede Drosselklappe (22) einen Montagesitz (25) umfasst, welcher koaxial zur Welle (20) angeordnet ist und die Welle (20) darin selbst aufnimmt.

9. Ansaugstutzen (3) nach Anspruch 8, in welchem der Montagesitz (25) jeder Drosselklappe (22) in einer Anzahl von halbkreisförmigen Brücken gebildet ist.

10. Ansaugstutzen (3) nach einem Ansprüche 1 bis 9, in welchem der Hebel (27) jedes Drosselventils (15) mit der Welle (20) einstückig ist und einen Verbindungsstift (28) aufweist, der exzentrisch in Bezug zu der Drehachse (22) montiert ist.

11. Ansaugstutzen (3) nach einem der Ansprüche 1 bis 10, in welchem das Drallsystem (14) eine einzelne Betätigungseinrichtung (16) umfasst, welche simultan und synchron alle Drosselventile (15) verschiebt.

12. Ansaugstutzen (3) nach Anspruch 11, in welchem die Betätigungseinrichtung (16) eine Stange (18) umfasst, welche mechanisch mit den Drosselventilen (15) verbunden ist, um so simultan und synchron alle Drosselventile (15) zu verschieben, und einen Motor (17), welcher die Verschiebung der Stange (18) zwischen zwei Grenzpositionen, die der Schließ- und maximalen Öffnungspositionen der Drosselventile (15) entsprechen, steuert.

13. Ansaugstutzen (3) nach Anspruch 12, in welchem der Hebel (27) jedes Drosselventils (15) mit der Welle (20) einstückig ist und einen Verbindungsstift (28) aufweist, der in Bezug zu der Drehachse (22) exzentrisch angebracht ist und eine mechanische Verbindung zwischen der Stange (18) der Betätigungseinrichtung (16) und dem Drosselventil (15) zum Übertragen einer Bewegung von der Betätigungseinrichtung (16) an das Drosselventil (15) einrichtet.

14. Montageverfahren eines Drosselventils (15), mit:
einer Welle (20), welche durch einen Kanal (10) eines Ansaugrohrs (9) hindurch angeordnet ist, drehbar um eine zentrale Drehachse (21) montiert ist und ein erstes Ende (26) aufweist, welche sich extern zum Kanal (10) erstreckt;
eine Drosselklappe (22), die durch die Welle (20) abgestützt ist und mit einem Montagesitz (25) versehen ist, der so ausgelegt ist, dass dieser die Welle (20) aufnimmt;
einem Hebel (27), der auf der Welle (20) an dem ersten Ende (26) angebracht ist, um die Drehbewegung der Welle (20) zu übertragen;
einen Sperrsitz (32), welcher eine Ringform (32) aufweist und durch die Wand des Kanals (10) des Ansaugrohrs (9) erhalten wird;
eine schalenförmige Befestigungsfeder (29), welche eine Kreisform hat, ein zentrales Durchgangsloch (30) durch welches die Welle (20) hindurch angeordnet ist, aufweist, in den Sperrsitz (32) gedrückt wird und mit der Welle (20) gekoppelt ist, um so die Drehung der Welle (20) um die Drehachse (21) herum zu erlauben und
einen axialen Schlupf der Welle (20) zu verhindern;
einen kreisförmigen Aufnahmesitz (33), welcher auf der Oberseite durch eine zentrale Wand (34) der Befestigungsfeder (29) geschlossen ist; und
einen Ringsitz (35), der in dem weiteren kreisförmigen Aufnahmesitz (33) aufgenommen ist;
wobei das Montageverfahren die Schritte umfasst:
Koppeln der Befestigungsfeder (29) an die Welle (20);
Koppeln des Hebels (27) an das erste Ende (26) der Welle (20);
Einsetzen des Sitzes (35) auf die Welle (20);
Anordnen der Drosselklappe (22) innerhalb des Kanals (10) des Ansaugrohrs (9); Einsetzen der Welle (20), durch ein Durchgangsloch (26) der Wand des Kanals (10) und durch den Montagesitz (25) hindurch, um so die Befestigungsfeder (29) vor dem Einlass des ringförmigen Sperrsitzes (32) anzuordnen;
Drücken der Befestigungsfeder (29) in den ringförmigen Sperrsitz (22), um so die Befestigungsfeder (29) zu verringern und die Dimension der Befestigungsfeder (29) zu verringern; und
starr Verbinden der Welle (20) mit der Drosselklappe (22).

15. Verfahren nach Anspruch 14, und mit den Schritten:
Anordnen der Drosselklappe (22) in dem Kanal (10) des Ansaugrohrs (9) in einer Öffnungsposition;
nachfolgendes Drehen der Drosselklappe (22) um 90° in eine Schließposition zum starren Verbinden der Welle (20) mit der Drosselklappe (22).

## Revendications

1. Collecteur d'admission (3) ayant un système tourbillonnaire (14) pour un moteur à combustion interne (1) doté d'un certain nombre de cylindres (2) ; pour chaque cylindre (2), le collecteur d'admission (3) comprend un tuyau d'admission (9) qui est adapté pour relier le collecteur d'admission (3) au cylindre (2) et comprend à son tour deux canaux (10) ; pour chaque tuyau d'admission (9), le système tourbillonnaire (14) comprend une soupape d'étranglement (15) qui est agencée dans un canal (10) du tuyau d'admission (9) et est adaptée pour faire varier la section d'introduction d'air à travers le canal (10) ;
chaque soupape d'étranglement (15) comprend :
un arbre (20), qui est agencé à travers le canal (10) du tuyau d'admission (9), est monté à rotation autour d'un axe central (21) de rotation, et présente une première extrémité (26) qui s'étend à l'extérieur du canal (10) ;
une plaque (22) de soupape papillon soutenue par l'arbre (20) ; et
un levier (27) ajusté sur l'arbre (20) au niveau de la première extrémité (26) pour transmettre le mouvement de rotation à l'arbre (20) lui-même ;
le collecteur d'admission (3) est **caractérisé en ce que** chaque soupape d'étranglement (15) comprend :
un siège de blocage (32), qui présente une forme annulaire (32) et qui est obtenu à travers la paroi du canal (10) du tuyau d'admission (9) ; et
un ressort (29) de fixation en forme de coupelle qui a une forme circulaire, présente un trou traversant central (30) à travers lequel l'arbre (20) est agencé, est entraîné dans le siège de blocage (32) et est raccordé à l'arbre (20) de sorte à permettre la rotation de l'arbre (20) autour de l'axe de rotation (21) et à empêcher un glissement axial de l'arbre (20) ;
dans lequel le siège de blocage (32) annulaire présente un diamètre externe plus petit que le diamètre externe du ressort de fixation (29) non déformé et le ressort de fixation (29) doit être entraîné dans le siège de blocage (32) annulaire de sorte à déformer le ressort de fixation (29) réduisant la dimension du ressort de fixation (29).

2. Collecteur d'admission (3) selon la revendication 1, dans lequel le ressort de fixation (29) présente une forme de coupelle ayant un bord annulaire externe (31) en forme de U.

3. Collecteur d'admission (3) selon la revendication 2, dans lequel le bord annulaire externe (31) du ressort de fixation (29) présente un certain nombre de coupes radiales (31) d'affaiblissement.

4. Collecteur d'admission (3) selon l'une des revendications 1 à 3, dans lequel l'arbre (20) présente une rainure annulaire (32) dans laquelle le ressort de fixation (29) est inséré pour empêcher tout glissement axial relatif entre l'arbre (20) et le ressort de fixation (29).

5. Collecteur d'admission (3) selon l'une des revendications 1 à 4, dans lequel un siège de réception (33) circulaire est considéré, qui est fermé sur le dessus par une paroi centrale (34) du ressort de fixation (29) et reçoit un joint d'étanchéité (35) annulaire.

6. Collecteur d'admission (3) selon la revendication 5, dans lequel le joint d'étanchéité (35) est maintenu en position et est légèrement comprimé par la paroi centrale (34) du ressort de fixation (29).

7. Collecteur d'admission (3) selon l'une des revendications 1 à 6, dans lequel une deuxième extrémité (23) de l'arbre (20) opposée à la première extrémité (26) est insérée dans un siège (24) obtenu le long d'une paroi du canal (10) du tuyau d'admission (9).

8. Collecteur d'admission (3) selon l'une des revendications 1 à 7, dans lequel chaque plaque (22) de soupape papillon comprend un siège d'assemblage (25) qui est agencé de manière coaxiale à l'arbre (20) et qui y reçoit l'arbre (20) lui-même.

9. Collecteur d'admission (3) selon la revendication 8, dans lequel le siège d'assemblage (25) de chaque plaque (22) papillon est défini par un nombre de ponts semi-circulaires.

10. Collecteur d'admission (3) selon l'une des revendications 1 à 9, dans lequel le levier (27) de chaque soupape d'étranglement (15) est solidaire de l'arbre (20) et présente une tige de liaison (28) montée de manière excentrique par rapport à l'axe de rotation (22).

11. Collecteur d'admission (3) selon l'une des revendications 1 à 10, dans lequel le système tourbillonnaire (14) comprend un dispositif d'actionnement (16) simple, qui déplace simultanément et de manière synchrone toutes les soupapes d'étranglement (15).

12. Collecteur d'admission (3) selon la revendication 11, dans lequel le dispositif d'actionnement (16) comprend une barre (18) qui est reliée mécaniquement à toutes les soupapes d'étranglement (15) de sorte à déplacer simultanément et de manière synchrone toutes les soupapes d'étranglement (15) elles mêmes, et un moteur (17) qui commande le déplacement de la barre (18) entre deux positions limites correspondant aux positions de fermeture et d'ouverture maximales des soupapes d'étranglement (15).

13. Collecteur d'admission (3) selon la revendication 12, le levier (27) de chaque soupape d'étranglement (15) est solidaire de l'arbre (20) et présente une tige de liaison (28), qui est montée de manière excentrique par rapport à l'axe de rotation (22) et réalise une liaison mécanique entre la barre (18) du dispositif d'actionnement (16) et de la soupape d'étranglement (15) pour transmettre un mouvement partant du dispositif d'actionnement (16) vers la soupape d'étranglement (15) elle-même.

14. Procédé d'assemblage d'une soupape d'étranglement (15), comprenant :
un arbre (20) qui est agencé à travers un canal (10) d'un tuyau d'admission (9), est monté à rotation autour d'un axe central (21) de rotation et présente une première extrémité (26) qui s'étend à l'extérieur du canal (10) ;
une plaque (22) de soupape papillon soutenue par l'arbre (20) et dotée d'un siège d'assemblage (25) adapté pour recevoir l'arbre (20) lui-même ;
un levier (27) ajusté sur l'arbre (20) au niveau de la première extrémité (26) afin de transmettre le mouvement de rotation à l'arbre (20) lui-même ;
un siège de blocage (32), qui présente une forme annulaire (32) et qui est obtenu à travers la paroi du canal (10) du tuyau d'admission (9) ;
un ressort de fixation (29) en forme de coupelle qui a une forme circulaire, présente un trou traversant (30) central à travers lequel l'arbre (20) est agencé, est entraîné dans le siège de blocage (32) et est raccordé à l'arbre (20) de sorte à permettre la rotation de l'arbre (20) autour de l'axe de rotation (21) et à empêcher un glissement axial de l'arbre (20)
un siège de réception (33) circulaire, qui est fermé sur le dessus par une paroi centrale (34) du ressort de fixation (29) ; et
un joint d'étanchéité (35) annulaire reçu dans le siège de réception (33) circulaire supplémentaire ;
le procédé d'assemblage comprenant les étapes qui consistent à :
raccorder le ressort de fixation (29) à l'arbre (20) ;
raccorder le levier (27) au niveau de la première extrémité (26) de l'arbre (20) ;
insérer le joint d'étanchéité (35) sur l'arbre (20) ;
agencer la plaque (22) de soupape papillon à l'intérieur du canal (10) du tuyau d'admission (9) ;
insérer l'arbre (20) à travers un trou traversant (36) de la paroi du canal (10) et à travers le siège d'assemblage (25) de manière à agencer le ressort de fixation (29) devant la zone d'entrée du siège de blocage (32) annulaire;
mener le ressort de fixation (29) à l'intérieur du siège de blocage (32) annulaire de manière à déformer le ressort de fixation (29) réduisant la dimension du ressort de fixation (29) ; et
relier l'arbre (20) à la plaque (22) de soupape papillon de manière rigide.

15. Procédé selon la revendication 14, et comprenant les étapes qui consistent à :
agencer la plaque (22) de soupape papillon à l'intérieur du canal (10) du tuyau d'admission (9) dans une position d'ouverture ;
mettre par la suite en rotation la plaque (22) de soupape papillon à 90° vers une position de fermeture pour relier de manière rigide l'arbre (20) lui-même à la plaque (22) de soupape papillon.
